(19) Europäisches Patentamt
European Patent Office
Office européen des brevets

(11) EP 4 267 405 B1

(12) **FASCICULE DE BREVET EUROPEEN**

(45) Date de publication et mention de la délivrance du brevet:
**30.10.2024 Bulletin 2024/44**

(21) Numéro de dépôt: **21835347.2**

(22) Date de dépôt: **29.11.2021**

(51) Classification Internationale des Brevets (IPC):
***B60C 1/00*** *(2006.01)* ***C08F 210/02*** *(2006.01)*
***C08L 23/08*** *(2006.01)* ***C08F 236/06*** *(2006.01)*

(52) Classification Coopérative des Brevets (CPC):
(C-Sets disponibles)
**C08F 210/02; B60C 1/0016; C08F 236/06;**
**C08L 23/08;** B60C 2200/06; Y02W 30/62 (Cont.)

(86) Numéro de dépôt international:
**PCT/FR2021/052121**

(87) Numéro de publication internationale:
**WO 2022/136750 (30.06.2022 Gazette 2022/26)**

(54) **COMPOSITION DE CAOUTCHOUC COMPRENANT UNE POUDRETTE DE CAOUTCHOUC**

KAUTSCHUKZUSAMMENSETZUNG MIT EINEM KAUTSCHUKGRANULAT

RUBBER COMPOSITION COMPRISING A CRUMB RUBBER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2020 FR 2013921**

(43) Date de publication de la demande:
**01.11.2023 Bulletin 2023/44**

(73) Titulaire: **COMPAGNIE GENERALE DES ETABLISSEMENTS MICHELIN**
**63000 Clermont-Ferrand (FR)**

(72) Inventeur: **FLEURY, Etienne**
**63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2018/115720 WO-A1-2020/128257**
**FR-A1- 3 086 948**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 267 405 B1

(52) Classification Coopérative des Brevets (CPC): (Cont.)

C-Sets
**C08F 210/02, C08F 4/52;**
**C08L 23/08, C08L 17/00, C08K 3/04, C08K 5/18, C08K 5/09, C08K 3/22, C08K 5/47, C08K 5/31, C08K 5/40, C08K 3/06;**
**C08L 23/08, C08L 19/003, C08K 3/04, C08K 5/18, C08K 5/09, C08K 3/22, C08K 5/47, C08K 5/31, C08K 5/40, C08K 3/06;**
C08F 210/02, C08F 236/06, C08F 2500/27; C08F 236/06, C08F 212/08

## Description

L'invention est relative à des compositions de caoutchouc comprenant des poudrettes de caoutchouc, notamment pour une utilisation dans des articles en caoutchouc, tels que les pneumatiques.

Il est intéressant aujourd'hui pour les industriels de pouvoir réutiliser des produits issus de caoutchouc recyclé, dans les articles en caoutchouc. Les poudrettes de caoutchouc sont particulièrement intéressantes dans ce cadre puisqu'elles résultent du recyclage par broyage d'articles en caoutchouc. Elles sont généralement utilisées comme charges dans des mélanges servant à produire des pièces ne subissant pas de contraintes mécaniques ou dynamiques élevées.

Il serait néanmoins intéressant de pouvoir les utiliser dans des articles à plus haute technicité, en maitrisant mieux les propriétés des compositions les contenant.

Il est connu dans l'état de l'art que les poudrettes de caoutchouc peuvent être utilisées en pneumatique. Par exemple, les documents WO2019/243711 A1, WO2018/115720 A1, et WO2020/128257 A1 décrivent l'utilisation de certaines poudrettes de caoutchouc dans des compositions pour pneumatique.

Il est également connu, comme décrit par exemple dans le document WO2020/053521 A1 que des élastomères copolymères contenant des unités éthylène et des unités 1,3-diène peuvent être utilisés dans les compositions de caoutchouc pour pneumatique.

Ainsi, la demanderesse a découvert que l'utilisation combinée d'une quantité déterminée de poudrette de caoutchouc et d'un élastomère spécifique permet d'obtenir des compositions de caoutchouc présentant d'excellentes propriétés d'endurance.

L'invention concerne une composition de caoutchouc à base d'au moins 50 à 100 pce d'un copolymère contenant des unités éthylène et des unités 1,3-diène, les unités éthylène dans le copolymère représentant plus de 50% en mole des unités monomères du copolymère, 0,1 à 9% en masse de poudrette de caoutchouc, une charge renforçante, et un système de réticulation.

L'invention concerne également un article en caoutchouc comprenant la composition selon l'invention, et préférentiellement un pneumatique comprenant une composition selon l'invention, de préférence dans tout ou partie de sa bande de roulement. De ce cas, le pneumatique selon l'invention sera de préférence choisi parmi les pneumatiques destinés à équiper un véhicule à deux roues, un véhicule de tourisme, ou encore un véhicule dit « poids lourd » (c'est-à-dire métro, bus, véhicules hors-la-route, engins de transport routier tels que camions, tracteurs, remorques), ou encore des avions, des engins de génie civil, agraire, ou de manutention.

De préférence l'invention concerne un pneumatique de véhicule de type poids lourd, comprenant la composition selon l'invention, de préférence dans tout ou partie de sa bande de roulement.

### I- Constituants de la composition de l'invention

Les compositions de caoutchouc selon l'invention sont à base d'au moins un copolymère contenant des unités éthylène et des unités 1,3-diène, une poudrette de caoutchouc, une charge renforçante et un système de réticulation.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ.

Par ailleurs, le terme « pce » signifie au sens de la présente demande de brevet, partie en poids pour cent parties d'élastomères, au sens de la préparation de la composition avant cuisson. C'est-à-dire, dans le cas de la présence d'une poudrette de caoutchouc, que le terme « pce » signifie partie en poids pour cent parties d'élastomères « neufs », excluant donc de la base 100 les élastomères contenus dans la poudrette de caoutchouc.

Dans la présente description, sauf indication expresse différente, tous les pourcentages (%) indiqués sont des pourcentages en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type et notamment plus de 50% de préférence plus de 75%. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. A titre d'exemple, dans un système comprenant un seul polymère, celui-ci est majoritaire au sens de la présente invention ; et dans un système comprenant deux polymères, le polymère majoritaire représente plus de la moitié de la masse des polymères. Au contraire, un composé « minoritaire »

est un composé qui ne représente pas la fraction massique la plus grande parmi les composés du même type.

Lorsqu'on fait référence à une unité (ou monomère) « majoritaire » au sein d'un même composé (ou polymère), on entend au sens de la présente invention, que cette unité (ou monomère) est majoritaire parmi les unités (ou monomères) formant le composé (ou polymère), c'est-à-dire que c'est celle qui représente la plus grande fraction, en masse parmi les unités (ou monomères) formant le composé (ou polymère).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage. Sont concernés notamment les polymères, les plastifiants, les charges, etc.

1-1 Elastomère

L'élastomère utile aux besoins de l'invention est un élastomère diénique fortement saturé, copolymère de préférence statistique, qui comprend des unités éthylène résultant de la polymérisation d'éthylène. De manière connue, l'expression « unité éthylène » fait référence au motif -(CH2-CH2)- résultant de l'insertion de l'éthylène dans la chaîne élastomère. L'élastomère diénique fortement saturé est un copolymère riche en unité éthylène, puisque les unités éthylène représentent au moins 50% en mole de l'ensemble des unités monomères de l'élastomère.

De préférence, l'élastomère diénique fortement saturé comprend au moins 65% molaire d'unité éthylène. Autrement dit, les unités éthylène représentent préférentiellement au moins 65% en mole de l'ensemble des unités monomères de l'élastomère diénique fortement saturé. De manière plus préférentielle, l'élastomère diénique fortement saturé comprend de 65% à 90% molaire d'unité éthylène, pourcentage molaire calculé sur la base de l'ensemble des unités monomères de l'élastomère diénique fortement saturé.

L'élastomère diénique fortement saturé étant un copolymère d'éthylène et d'un 1,3-diène comprend aussi des unités 1,3-diène résultant de la polymérisation d'un 1,3-diène. De manière connue, l'expression « unité 1,3-diène » fait référence aux unités résultant de l'insertion du 1,3-diène par une addition 1,4, une addition 1,2 ou une addition 3,4 dans le cas de l'isoprène. Les unités 1,3-diène sont celles par exemple d'un 1,3-diène ayant 4 à 12 atomes de carbone, tels que le 1,3-butadiène, l'isoprène, le 1,3-pentadiène, un aryl-1,3-butadiène. De préférence, le 1,3-diène est le 1,3-butadiène, auquel cas l'élastomère diénique fortement saturé est un copolymère d'éthylène et de 1,3-butadiène, de préférence statistique.

L'élastomère diénique fortement saturé utile aux besoins de l'invention, peut être obtenu selon différentes méthodes de synthèses connues de l'homme du métier, notamment en fonction de la microstructure visée de l'élastomère diénique fortement saturé. Généralement, il peut être préparé par copolymérisation au moins d'un 1,3-diène, de préférence le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224 au nom de la Demanderesse. L'élastomère diénique fortement saturé, y compris lorsqu'il est statistique, peut être préparé aussi par un procédé utilisant un système catalytique de type préformé comme ceux décrits dans les documents WO 2017093654 A1, WO 2018020122 A1 et WO 2018020123 A1.

Pour l'invention, l'élastomère diénique fortement saturé contient de préférence des unités de formule (I) ou des unités de formule (II).

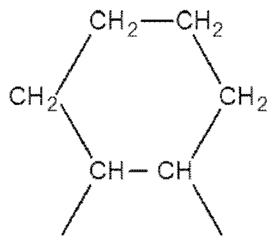

(I)

-CH2-CH(CH=CH2)- (II)

La présence de motif cyclique saturé à 6 membres, 1,2-cyclohexanediyle, de formule (I) dans le copolymère peut résulter d'une série d'insertions très particulières de l'éthylène et du 1,3-butadiène dans la chaîne polymère au cours de sa croissance. Lorsque l'élastomère diénique fortement saturé comprend des unités de formule (I) ou des unités de formule (II), les pourcentages molaires des unités de formule (I) et des unités de formule (II) dans l'élastomère

diénique fortement saturé, respectivement o et p, satisfont de préférence à l'équation suivante (eq. 1), de manière plus préférentielle à l'équation (eq. 2), et plus préférentiellement à l'équation (eq. 3), o et p étant calculés sur la base de l'ensemble des unités monomères de l'élastomère diénique fortement saturé.

$$0 < o+p \leq 35 \qquad \text{(eq. 1)}$$

$$0 < o+p \leq 25 \qquad \text{(eq. 2)}$$

$$0 < o+p < 20 \qquad \text{(eq. 3)}$$

L'élastomère diénique fortement saturé utile aux besoins de l'invention peut être constitué d'un mélange d'élastomères diéniques fortement saturés qui se différencient les uns des autres par leurs microstructures ou par leurs macrostructures.

Selon l'invention, le taux de l'élastomère diénique fortement saturé dans la composition de caoutchouc est d'au moins 50 parties en poids pour cent parties d'élastomère de la composition de caoutchouc (pce). De préférence, le taux de l'élastomère diénique fortement saturé dans la composition de caoutchouc varie dans un domaine allant de 80 à 100 pce. De manière plus préférentielle, il varie dans un domaine allant de 90 à 100 pce.

De façon optionnelle complémentaire, si un autre élastomère est présent dans la composition, il peut être choisi dans le groupe constitué par les élastomères diéniques et les mélanges de ces derniers. Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non). Préférentiellement, l'élastomère diénique est choisi dans le groupe constitué par les polybutadiènes (BR), les polyisoprènes - de synthèse (IR), ou le caoutchouc naturel (NR) -, les copolymères de butadiène, les copolymères d'isoprène, et les mélanges de ces élastomères. De tels copolymères de butadiène et copolymères d'isoprène sont plus préférentiellement respectivement les copolymères de butadiène-styrène (SBR) et les copolymères d'isoprène-styrène (SIR).

Détermination de la microstructure des élastomères

La microstructure des élastomères est déterminée par analyse RMN 1H, suppléée par l'analyse RMN 13C lorsque la résolution des spectres RMN du 1H ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone. Pour les élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz. Pour les mesures sur des élastomères solubles, est utilisée une sonde RMN liquide permettant d'observer le proton et le carbone en mode découplé du proton. La préparation des échantillons non solubles est faite dans des rotors remplis avec le matériau analysé et un solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante. Les échantillons solubles sont mis en solution dans un solvant deutéré (environ 25mg d'élastomère dans 1mL), en général du chloroforme deutéré (CDCl3). Le solvant ou coupage de solvant utilisé doit toujours être deutéré et sa nature chimique peut être adaptée par l'homme du métier. Dans les deux cas (échantillon soluble ou échantillon gonflé). Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative. Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative. Les mesures de RMN sont réalisées à 25°C.

I-2 Poudrette de caoutchouc

La composition de l'invention comprend également une poudrette de caoutchouc (en abrégé « poudrette » dans ce qui suit).

Les poudrettes se présentent sous la forme de granulés, éventuellement mis sous forme d'une plaque de caoutchouc. Le plus souvent les poudrettes de caoutchouc sont issues d'un broyage ou d'une micronisation de compositions de caoutchouc cuites déjà utilisées pour une première application, par exemple en pneumatique, elles sont un produit de recyclage des matériaux. Les poudrettes sont donc de préférence constituées d'une composition à base d'au moins un élastomère et une charge. De préférence les poudrettes se présentent sous la forme de microparticules.

Par « microparticules » on entend des particules qui présentent une taille, à savoir leur diamètre dans le cas de particules sphériques ou leur plus grande dimension dans le cas de particules anisométriques, de quelques dizaines ou centaines de micron.

Selon l'invention, la poudrette de caoutchouc est présente à un taux compris dans un domaine allant de 0,1 à 9% en masse dans la composition (c'est-à-dire par rapport à la masse totale de la composition), préférentiellement de 0,5 à 7% en masse et plus préférentiellement de 1 à 6% en masse. Dans une composition type destinée au pneumatique ces taux massiques correspondent préférentiellement à des taux d'environ de 0,1 à 16 pce. De préférence, le taux de poudrette est compris dans un domaine allant de 0,5 à 15 pce, préférentiellement de 1 à 12 pce, plus préférentiellement de 1 à 10 pce, et très préférentiellement de 2 à 10 pce.

La poudrette de caoutchouc présente préférentiellement une taille moyenne D50 compris entre 100 et 300 $\mu$m.

Également, la poudrette présente de préférence une distribution de taille de particules telle que le rapport des tailles moyennes D10/D50 est supérieur ou égal à 0,5, de préférence entre 0,55 et 0,95 et plus préférentiellement entre 0,6 et 0,9, et plus préférentiellement encore entre 0,65 et 0,85.

Ces poudrettes spécifiques peuvent être obtenues par différentes technologies, notamment par des procédés de micronisation cryogénique tels que décrits dans les documents US 7,445,170 et US 7,861,958. Selon un autre mode de réalisation de l'invention, les poudrettes peuvent être obtenues par d'autres procédés de micronisation connus de l'homme de l'art et non limités au seul procédé cryogénique.

Selon la distribution de taille d'objets obtenue, la poudrette obtenue par les procédés cités peut subir une étape supplémentaire de tamisage de sorte à maitriser cette distribution. Le tamisage peut être réalisé par différentes technologies (vibration, centrifugation, aspiration) connues de l'homme de l'art.

Également, des poudrettes disponibles commercialement telles que la poudrette « Polydine PD80 » de la société Lehigh Technologies peuvent être utilisées.

Comme discuté précédemment, les poudrettes sont de préférence constituées d'une composition à base d'un élastomère et d'une charge. Elles peuvent également comprendre tous les ingrédients usuellement utilisés dans les compositions de caoutchouc tels que les plastifiants, les antioxydants, les additifs de vulcanisations etc.

Ainsi, la poudrette comprend un élastomère, préférentiellement un élastomère diénique. Cet élastomère représente préférentiellement au moins 30% en masse, plus préférentiellement au moins 35% en masse, encore plus préférentiellement au moins 45% en masse du poids de la poudrette, pourcentage déterminé selon la norme ASTM E1131. Il est choisi préférentiellement dans le groupe constitué par les polybutadiènes, les polyisoprènes y compris le caoutchouc naturel, les copolymères de butadiène et les copolymères d'isoprène. Plus préférentiellement le taux molaire de motifs d'origine diénique (diènes conjugués) présent dans l'élastomère diénique est supérieur à 50%, de préférence entre 50% et 70%.

Selon un mode de réalisation préférentiel de l'invention, la poudrette contient entre 5 et 80% en masse de charge, plus préférentiellement entre 10% et 75%, et très préférentiellement entre 15% et 70%.

Par charge, on entend ici tout type de charge, qu'elle soit renforçante (typiquement à particules nanométriques, et préférentiellement de taille moyenne en poids inférieure à 500 nm, notamment entre 20 et 200 nm) ou qu'elle soit non-renforçante ou inerte (typiquement à particules micrométriques, et préférentiellement de taille moyenne en poids supérieure à 1 $\mu$m, par exemple entre 2 et 200 $\mu$m). La taille moyenne en poids des particules nanométriques est mesurée de manière bien connue de l'homme du métier (à titre d'exemple, selon la demande WO2009/083160 paragraphe I.1). La taille moyenne en poids des particules micrométriques peut être déterminée par tamisage mécanique.

A titre d'exemples de charges connues comme renforçantes par l'homme du métier, on citera notamment du noir de carbone ou une charge inorganique renforçante telle que la silice ou l'alumine en présence d'un agent de couplage, ou leurs mélanges.

Selon un mode de réalisation préférentiel de l'invention, la poudrette comprend à titre de charge une charge renforçante, notamment un noir de carbone ou un mélange de noirs de carbone.

Le noir de carbone ou le mélange de noirs de carbone représente préférentiellement plus de 50%, plus préférentiellement plus de 80%, encore plus préférentiellement plus de 90% en masse du poids de la charge renforçante de la poudrette. Selon un mode de réalisation davantage préférentiel, la charge renforçante est constituée d'un noir de carbone ou d'un mélange de noirs de carbone.

De manière très préférentielle, le noir de carbone est présent dans la poudrette à un taux allant de 20 à 40% massique, plus préférentiellement de 25 à 35% massique.

Comme noirs de carbone conviennent tous les noirs de carbone, notamment les noirs du type HAF, ISAF, SAF, FF, FEF, GPF et SRF conventionnellement utilisés dans les compositions de caoutchouc pour pneumatiques (noirs dits de grade pneumatique).

La poudrette peut contenir tous les autres additifs usuels qui entrent dans une composition de caoutchouc, notamment pour pneumatique. Parmi ces additifs usuels on peut citer les plastifiants liquides ou solides, les charges non renforçantes telles que la craie, le kaolin, les agents de protection, les agents de vulcanisation. Ces additifs peuvent se trouver dans la poudrette aussi sous la forme de résidu ou de dérivé, puisqu'ils ont pu réagir au cours des étapes de fabrication de la composition ou de réticulation de la composition à partir de laquelle est issue la poudrette.

Les poudrettes peuvent être de simples broyats / micronisats de caoutchouc, sans autre traitement. Il est également connu que ces poudrettes peuvent subir un traitement afin de les modifier. Ce traitement peut consister à une modification chimique de fonctionnalisation ou de dévulcanisation. Il peut aussi s'agir d'un traitement thermomécanique, thermochimique, biologique... Préférentiellement pour l'invention, on utilise une poudrette qui n'a pas subi de modification par traitement thermique et/ou mécanique, et/ou biologique et/ou chimique.

Concernant les constituants de la poudrette, on préfère pour les besoins de l'invention que la poudrette présente un extrait acétonique compris entre 3 et 30 % massique, plus préférentiellement compris entre 3 et 15 % massique, plus préférentiellement compris entre 3 et 10 % massique.

Également, il est préférable que la poudrette présente un extrait chloroformique compris entre 3 et 85% massique, plus préférentiellement compris entre 3 et 20% massique, plus préférentiellement compris entre 5 et 15 % massique.

Préférentiellement, l'extrait chloroformique de la poudrette de caoutchouc présente une masse moléculaire moyenne en masse (Mw) inférieur à 10000 g/mol, de préférence inférieure à 8000 g/mol.

De manière préférée dans ce type de poudrette, le ratio de l'extrait chloroformique sur l'extrait acétonique, exprimés en pourcentage massique, est inférieur à 1,5.

Les caractéristiques des poudrettes de caoutchouc, telles que décrites ci-dessus, sont mesurées comme indiqué ci-dessous.

Mesure de la taille des particules de poudrette :

La distribution en masse de taille des particules de poudrette peut être mesurée par granulométrie laser, sur un appareil de type mastersizer 3000 de la société Malverne. La mesure est réalisée en voie liquide, dilués dans l'alcool après un traitement préalable de 1min d'ultra-sons afin de garantir la dispersion des particules. La mesure est réalisée conformément à la norme ISO-13320-1 et permet de déterminer notamment le D10 et le D50, c'est-à-dire le diamètre moyen en dessous duquel respectivement 10% en masse et 50% en masse de la population totale de particules est présente.

Mesure de la fraction massique de noir de carbone :

La mesure de la fraction massique de noir de carbone est faite par une analyse thermogravimétrique (ATG) selon la norme NF T-46-07, sur un appareil de la société Mettler Toledo modèle « TGA/DSC1 ». Environ 20g d'échantillon est introduit dans l'analyseur thermique, puis soumis à un programme thermique de 25 à 600°C sous atmosphère inerte (phase pyrolysable) puis de 400 à 750°C sous atmosphère oxydante (phase oxydable). La masse de l'échantillon est mesurée en continu tout au long du programme thermique. Le taux de matière organique correspond à la perte de masse mesurée lors de la phase pyrolysable rapportée à la masse d'échantillon initiale. Le taux de noir de carbone correspond à la perte de masse mesurée lors de la phase oxydable rapportée à la masse d'échantillon initiale.

Mesure de l'extrait acétonique :

Le taux d'extrait acétonique est mesuré selon la norme ISO1407, au moyen d'un extracteur de type soxhlet.

Une prise d'essai d'échantillon (entre 500 mg et 5g) est introduite dans une cartouche d'extraction puis placée dans le tube extracteur du soxhlet. Un volume d'acétone égal à deux ou trois fois le volume du tube extracteur est placé dans le collecteur du soxhlet. Le soxhlet est ensuite assemblé puis mis à chauffer durant 16h.

L'échantillon est pesé après extraction. Le taux d'extrait acétonique correspond à la perte de masse de l'échantillon durant l'extraction, rapportée à sa masse initiale.

On peut également calculer le taux d'élastomère, qui correspond au taux de matière organique déterminé par analyse thermo-gravimétrique auquel on soustrait le taux d'extrait acétonique.

Mesure de l’extrait chloroformique :

Le taux d’extrait chloroformique est mesuré selon la norme ISO1407, au moyen d’un extracteur de type soxhlet.
Une prise d’essai d’échantillon (entre 500 mg et 5g) est introduite dans une cartouche d’extraction puis placée dans le tube extracteur du soxhlet. Un volume de chloroforme égal à deux ou trois fois le volume du tube extracteur est placé dans le collecteur du soxhlet. Le soxhlet est ensuite assemblé puis mis à chauffer durant 16h.
L’échantillon est pesé après extraction. Le taux d’extrait chloroformique correspond à la perte de masse de l’échantillon durant l’extraction, rapportée à sa masse initiale.

Mesure des masses moléculaires moyennes de l’extrait chloroformique :

Les masses moléculaires sont déterminées par chromatographie d’exclusion stérique, selon un étalonnage de Moore et selon la norme ISO16014.
La mesure de la masse moléculaire moyenne en poids (Mw) de l’extrait chloroformique est réalisée par chromatographie d’exclusion stérique (SEC) avec un détecteur à indice de réfraction (RI). Le système est composé d’une chaine Alliance 2695 de chez Waters, d’un four à colonne de chez Waters ainsi que d’un détecteur RI 410 de chez Waters. Le jeu de colonnes utilisé est composé de 2 colonnes PL GEL MIXED D (300 x 7,5 mm 5μm) suivies de 2 colonnes PL GEL MIXED E (300 x 7,5 mm 3μm) de la société Agilent. Ces colonnes sont placées dans un four à colonnes thermostaté à 35°C. La phase mobile utilisée est du tétrahydrofurane non antioxydé. Le débit de la phase mobile est de 1ml/min. Le détecteur RI est également thermostaté à 35°C.
L’extrait chloroformique est séché sous flux d’azote. L’extrait sec est ensuite repris à 1g/l dans le tétrahydrofurane non antioxydé à 250 ppm pendant 2 heures sous agitation. La solution obtenue est filtrée à l’aide d’une seringue et d’un filtre seringue 0,45μm en PTFE à usage unique. 100 μl de la solution filtrée est injecté dans le système chromatographique conditionné à 1ml/min et 35°C.
Les résultats de Mw sont fournis par intégration des pics chromatographiques détectés par détecteur RI au-delà d’une valeur de 2000g/mol. La Mw est calculée à partir d’une calibration réalisée à l’aide de polystyrènes étalons.

I-3 Charge renforçante

Selon l’invention, la composition de caoutchouc comprend une charge renforçante, et de préférence un noir de carbone à titre de charge renforçante. Une charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.
Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Lorsque la composition de caoutchouc conforme à l’invention est utilisée dans une bande de roulement, le noir de carbone est préférentiellement un noir de carbone des séries 100 ou 200.
Le taux de noir de carbone peut varier dans une large mesure et est ajusté par l’homme du métier selon l’application envisagée de la composition de caoutchouc, en particulier dans le domaine du pneumatique. Pour une application de la composition de caoutchouc dans une bande de roulement, en particulier pour véhicules destinés à porter de lourdes de charges, le taux de noir de carbone dans la composition de caoutchouc est compris préférentiellement entre 25 pce et 65 pce. Pour une telle application dans le domaine des véhicules poids lourds, la composition de caoutchouc peut présenter un niveau de renforcement insuffisant au-dessous de 25 pce et peut présenter une hystérèse excessive au-dessus de 65 pce.

I-4 Système de réticulation

Dans la composition de l’invention, on peut utiliser tout type de système de réticulation connu de l’homme du métier pour les compositions de caoutchouc.
De préférence, le système de réticulation est un système de vulcanisation, c’est-à-dire à base de soufre (ou d’un agent donneur de soufre) et d’un accélérateur primaire de vulcanisation. A ce système de vulcanisation de base peuvent venir s’ajouter, incorporés au cours de la première phase non-productive et/ou au cours de la phase productive telles que décrites ultérieurement, divers accélérateurs secondaires ou activateurs de vulcanisation connus tels qu’oxyde de zinc, acide stéarique ou composés équivalents, dérivés guanidiques (en particulier diphénylguanidine).
Le soufre est utilisé à un taux préférentiel compris entre 0,1 et 10 pce, plus préférentiellement compris entre 0,2 et 5 pce, en particulier entre 0,3 et 3 pce.

Le système de vulcanisation de la composition selon l'invention peut également comprendre un ou plusieurs accélérateurs additionnels, par exemple les composés de la famille des thiurames, les dérivés dithiocarbamates de zinc, les sulfénamides, les guanidines ou les thiophosphates. On peut utiliser en particulier tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-tert-butyl-2-benzothiazyle sulfénamide (en abrégé "TBBS"), N-tert-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur du type sulfénamide.

Selon un mode de réalisation particulier, on utilise un mélange de deux accélérateurs de vulcanisation, dits accélérateurs primaire et secondaire. Avantageusement, la quantité de l'accélérateur de vulcanisation, c'est à dire la somme de la quantité d'accélérateur primaire et de la quantité d'accélérateur secondaire, est d'au moins 0.5 pce.

On peut utiliser comme accélérateur de vulcanisation primaire tout composé susceptible d'agir comme accélérateur de vulcanisation des élastomères diéniques en présence de soufre, notamment des accélérateurs du type thiazoles ainsi que leurs dérivés, des accélérateurs de types sulfénamides. A titre d'exemples d'accélérateurs primaires, on peut citer notamment les composés sulfénamides tels que la N-cyclohexyl-2-benzothiazyle sulfénamide ("CBS"), la N,N-dicyclohexyl-2-benzothiazyle sulfénamide ("DCBS"), la N-ter-butyl-2-benzothiazyle sulfénamide ("TBBS"), et les mélanges de ces composés. L'accélérateur primaire est préférentiellement une sulfénamide, plus préférentiellement la N-cyclohexyl-2-benzothiazyle sulfénamide.

On peut utiliser comme accélérateur de vulcanisation secondaire tout composé du type thiurames, dithiocarbamates, dithiophosphates, thiourées et xanthates. A titre d'exemple d'accélérateurs secondaires, on peut citer notamment les disulfures de thiurame tels que le disulfure de tétraéthylthiurame, le disulfure de tétrabutylthiurame ("TBTD"), le disulfure de tétrabenzylthiurame ("TBZTD") et les mélanges de ces composés. L'accélérateur secondaire est préférentiellement un disulfure de thiurame, plus préférentiellement le disulfure de tétrabenzylthiurame.

De préférence, l'accélérateur de vulcanisation est un mélange d'une sulfénamide et d'un disulfure de thiurame. L'accélérateur de vulcanisation est avantageusement un mélange de N-cyclohexyl-2-benzothiazyle sulfénamide et d'un disulfure de thiurame, plus avantageusement un mélange de N-cyclohexyl-2-benzothiazyle sulfénamide et de disulfure de tétrabenzylthiurame.

De préférence, le ratio massique entre la quantité de l'accélérateur secondaire et la quantité totale d'accélérateurs est inférieur à 0.7, la quantité totale d'accélérateurs. Autrement dit, le taux massique ou quantité massique de l'accélérateur secondaire représente moins de 70% en masse de la quantité totale d'accélérateurs. De préférence, le ratio massique entre la quantité de l'accélérateur secondaire et la quantité totale d'accélérateurs est supérieur à 0.05, plus particulièrement compris entre 0.05 et 0.7. De préférence, le ratio massique entre la quantité de l'accélérateur secondaire et la quantité totale d'accélérateurs est préférentiellement inférieur à 0.5, encore plus préférentiellement inférieur ou égale à 0.3. Ces plages préférentielles permettent d'optimiser le compromis entre les propriétés de cohésion et les temps de cuisson sous presse en diminuant très fortement la durée sous presse tout en maintenant de bonnes propriétés limite, même en la présence d'une amorce de fissure dans la composition de caoutchouc.

Selon un mode de réalisation préférentiel, le rapport massique entre le taux de soufre et la quantité totale d'accélérateurs dans la composition de caoutchouc est inférieur à 1, de préférence inférieur ou égal à 0.7, de manière plus préférentielle inférieur à 0.6. L'utilisation de tels rapports permettent d'obtenir des compositions avec des propriétés de cohésion davantage améliorées.

I-5 Autres additifs possibles

La composition de caoutchouc utile aux besoins de l'invention peut comporter également tout ou partie des additifs usuels habituellement utilisés dans les compositions d'élastomères destinées à être utilisées dans un pneumatique, comme par exemple dans une bande de roulement pour pneumatique. De tels additifs sont par exemple des charges telles que silices, alumines, des agents de mise en oeuvre, des agents plastifiants (tels que des huiles ou des résines plastifiantes), des agents anti-fatigue, des résines renforçantes, des accepteurs de méthylène (par exemple résine phénolique novolaque) ou des donneurs de méthylène (par exemple HMT ou H3M), des pigments, ou des agents de protection tels que cires anti-ozone, anti-ozonants chimiques, anti-oxydants.

Bien entendu, les compositions selon l'invention peuvent être utilisées seules ou en coupage (i.e., en mélange) avec toute autre composition de caoutchouc utilisable pour la fabrication d'articles en caoutchouc, et selon un mode préférentiel, de pneumatiques.

Il va de soi que l'invention concerne les compositions de caoutchouc précédemment décrites tant à l'état dit "cru" ou non réticulé (i.e., avant cuisson) qu'à l'état dit "cuit" ou réticulé, ou encore vulcanisé (i.e., après réticulation ou vulcanisation).

II- Procédé de préparation des compositions de caoutchouc

La composition de caoutchouc peut être fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le soufre ou le donneur de soufre et l'accélérateur de vulcanisation.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en oeuvre complémentaires et autres additifs divers, à l'exception du soufre et des accélérateurs de vulcanisation. La durée totale du malaxage, dans cette phase non-productive, est de préférence comprise entre 1 et 15 min. Après refroidissement du mélange ainsi obtenu au cours de la première phase non-productive, on incorpore alors le soufre et l'accélérateur de vulcanisation à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue peut ensuite être calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis pour pneumatiques. Ces produits peuvent ensuite être utilisés pour la fabrication d'articles en caoutchouc tels que des pneumatiques, selon les techniques connues de l'homme du métier.

La réticulation (ou cuisson) peut être conduite de manière connue à une température généralement comprise entre 130°C et 200°C, sous pression, pendant un temps suffisant qui peut varier par exemple entre 5 et 90 min en fonction notamment de la température de cuisson, du système de réticulation adopté, de la cinétique de réticulation de la composition considérée ou encore de la taille de l'article fabriqué.

Les exemples qui suivent illustrent l'invention sans toutefois la limiter.

III- Exemples de réalisation de l'invention

III-1 Caractérisation des compositions de caoutchouc

Dans les exemples, les compositions de caoutchouc sont caractérisées après cuisson comme indiqué ci-après.

Fatigue:

La résistance à la fatigue, exprimée en nombre de cycles ou en unité relative (u r), est mesurée de manière connue sur 12 éprouvettes soumises à des tractions répétées de faible fréquence jusqu'à un allongement de 75%, à 23°C, à l'aide d'un appareil Monsanto (type « MFTR ») jusqu'à rupture de l'éprouvette, selon les normes ASTM D4482-85 et ISO40 6943.

Le résultat est exprimé en base 100 pour une comparaison facilitée des résultats. Une valeur supérieure à celle du témoin, arbitrairement fixée à 100, indique un résultat amélioré c'est-à-dire une meilleure résistance à la fatigue des échantillons de caoutchouc.

Propriétés dynamiques :

Les propriétés dynamiques et plus particulièrement l'hystérèse telle que représentée par le tan(delta)max, ou également la rigidité telle que représentée par le G*(50%) sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm2 de section), soumis à une sollicitation sinusoïdale en cisaillement simple alterné, à la fréquence de 10Hz, dans les conditions contrôlées en température (60°C). On effectue un balayage en amplitude de déformation de 0,1 à 100% (cycle aller), puis de 100% à 1% (cycle retour). Les résultats exploités ici sont d'une part le facteur de perte tan(delta), représentatif de l'hystérèse des compositions, et d'autre part la rigidité à 50% de déformation G*(50%). Pour le cycle aller, on indique la valeur maximale de tan(delta) observée, noté tan(delta)max.

Les résultats sont exprimés en performance en base 100, c'est-à-dire qu'on affecte arbitrairement la valeur 100 au meilleur témoin, pour calculer et comparer ensuite le tan(delta)max et le G*(50%) des différentes solutions testées. Pour le tan(delta)max, une valeur plus faible représente une diminution de la performance en hystérèse (c'est-à-dire une valeur de tan(delta)max plus grande) tandis qu'une valeur plus élevée représente une meilleure performance.

Pour le G*(50%), une valeur plus faible représente une diminution de la performance en rigidité (c'est-à-dire une valeur de G*(50%) plus faible) tandis qu'une valeur plus élevée représente une meilleure performance.

III-2 Compositions de caoutchouc

L'élastomère (EBR) est préparé selon le mode opératoire suivant : 30 mg de métallocène [{Me2SiFlu2Nd(μ-BH4)2Li(THF)}2, le symbole Flu représentant le groupe fluorényle de formule C13H8] sont introduits dans une première bouteille Steinie en boite à gant. Le co-catalyseur, le butyloctylmagnésium mis au préalable en solution dans 300 ml de méthylcyclohexane dans une seconde bouteille Steinie, est introduit dans la première bouteille Steinie contenant le métallocène dans les proportions suivantes 0.00007 mol/L de métallocène, 0.0004 mol/L de co-catalyseur. Après 10 minutes de contact à température ambiante est obtenue une solution catalytique. La solution catalytique est ensuite introduite dans le réacteur de polymérisation. La température dans le réacteur est alors augmentée à 80°C. Lorsque cette température est atteinte, la réaction démarre par injection d'un mélange gazeux d'éthylène et de 1,3-butadiène (80/20 % molaire) dans le réacteur. La réaction de polymérisation se déroule à une pression de 8 bars. Les proportions de métallocène et de co-catalyseur sont respectivement de 0.00007 mol/L et 0.0004 mol/L. La réaction de polymérisation est stoppée par refroidissement, dégazage du réacteur et ajout d'éthanol. Un antioxydant est ajouté à la solution de polymère. Le copolymère est récupéré par séchage en étuve sous vide.

Les compositions de caoutchouc dont le détail de la formulation figure dans le tableau 1, ont été préparées de la manière suivante :

On introduit dans un mélangeur interne (taux de remplissage final : environ 70% en volume), dont la température initiale de cuve est d'environ 80°C, successivement l'élastomère, la charge renforçante ainsi que les divers autres ingrédients à l'exception du soufre et de l'accélérateur de vulcanisation. On conduit alors un travail thermomécanique (phase non-productive) en une étape, qui dure au total environ 3 à 4 min, jusqu'à atteindre une température maximale de « tombée » de 165°C. On récupère le mélange ainsi obtenu, on le refroidit puis on incorpore le soufre et l'accélérateur de vulcanisation sur un mélangeur (homo-finisseur) à 30 °C, en mélangeant le tout (phase productive) pendant un temps approprié (par exemple une dizaine de minutes).

Les compositions ainsi obtenues sont ensuite calandrées soit sous la forme de plaques (épaisseur 2 à 3mm) ou de feuilles fines de caoutchouc pour la mesure de leur propriétés physiques ou mécaniques, soit extrudées sous la forme d'une bande de roulement pour pneumatique.

Parmi les compositions sont présentées au tableau 1, seule la composition C2 est conforme à l'invention. Les compositions T1 à T3, C1 et C3 sont des essais comparatifs visant à illustrer l'effet de l'invention. Les performances des compositions sont présentées dans le tableau 2.

Tableau 1

| Composition | T1 | T2 | T3 | | C1 | C2 | C3 |
|---|---|---|---|---|---|---|---|

(suite)

| Composition | T1 | T2 | T3 | | C1 | C2 | C3 |
|---|---|---|---|---|---|---|---|
| NR (1) | 60 | 60 | 60 | | - | - | - |
| SBR (2) | 20 | 20 | 20 | | - | - | - |
| BR (3) | 20 | 20 | 20 | | - | - | - |
| EBR (4) | - | - | - | | 100 | 100 | 100 |
| Poudrette (5) | - | 8,5 | 18 | | - | 8,5 | 17 |
| Poudrette (%m) | - | 5% | 10% | | - | 5% | 10% |
| Noir de carbone (6) | 54 | 54 | 54 | | 40 | 40 | 40 |
| Antioxydant (7) | 2 | 2 | 2 | | 2 | | |
| Acide stéarique (8) | 1,5 | 1,5 | 1,5 | | 1,5 | 1,5 | 1,5 |
| Oxyde de zinc (9) | 2,5 | 2,5 | 2,5 | | 2,5 | 2,5 | 2,5 |
| Accélérateur 1 (10) | 1,1 | 1,1 | 1,1 | | 0,5 | 0,5 | 0,5 |
| Accélérateur 2 (11) | - | - | - | | 0,5 | 0,5 | 0,5 |
| Accélérateur 3 (12) | - | - | - | | 0,3 | 0,3 | 0,3 |
| Soufre | 1,1 | 1,1 | 1,1 | | 0,4 | 0,4 | 0,4 |

(1) NR : Caoutchouc naturel
(2) SBR avec 15.5% en poids de motif styrène et pour la partie butadiénique, 24 % de motif 1,2 et Tg = - 65 °C
(3) BR : polybutadiène « CB24 » de la société Lanxess ; 96% de 1,4-cis ; Tg = -107°C
(4) EBR : Elastomère à 79% en mole d'unité éthylène, 7% en mole d'unité 1,2-cyclohexanediyle, 8% en mole de motif 1,2-butadiényle, 6% en mole de motif 1,4-butadiényle, préparé comme indiqué ci-dessus
(5) Poudrette « Polydine PD 80 » de la société Lehigh Technologies
(6) Noir de carbone Grade ASTM N234
(7) N-(1,3-diméthylbutyl)-N'-phényl-p-phénylènediamine (Santoflex 6-PPD) de la société Flexsys
(8) Stéarine « Pristerene 4931 » de la société Uniqema
(9) Oxyde de zinc de grade industriel - société Umicore
(10) N-cyclohexyl-2-benzothiazol-sulfénamide (« Santocure CBS » de la société Flexsys)
(11) Diphénylguanidine (« Perkacit DPG » de la société Flexsys)
(12) Disulfure de tétrabenzylthiurame (« Perkacit TBZTD » de la société Flexsys)

Tableau 2

| Performance | T1 | T2 | T3 | | C1 | C2 | C3 |
|---|---|---|---|---|---|---|---|
| Fatigue (base 100) | 100 | 79 | 68 | | 100 | 195 | 11 |
| G*50% | 100 | 105 | 106 | | 100 | 104 | 110 |
| Tan(delta)max | 100 | 103 | 101 | | 100 | 100 | 99 |

On note que la composition C2, seule conforme à l'invention présente de façon surprenante une très grande amélioration de son endurance, telle que mesurée par sa résistance à la fatigue, tout en conservant une rigidité et une hystérèse optimales.

## Revendications

**1.** Composition de caoutchouc à base d'au moins :

- de 50 à 100 pce d'un copolymère contenant des unités éthylène et des unités 1,3-diène, les unités éthylène

dans le copolymère représentant plus de 50% en mole des unités monomères du copolymère,
- de 0,1 à 9% en masse de poudrette de caoutchouc,
- une charge renforçante,
- un système de réticulation.

**2.** Composition selon la revendication précédente dans laquelle copolymère contenant des unités éthylène et des unités 1,3-diène comprend au moins 65% molaire d'unité éthylène, de préférence de 65% à 90% molaire d'unité éthylène.

**3.** Composition selon l'une quelconque des revendications précédentes dans laquelle le 1,3-diène est le 1,3-butadiène.

**4.** Composition selon l'une quelconque des revendications précédentes dans laquelle le taux de copolymère contenant des unités éthylène et des unités 1,3-diène dans la composition de caoutchouc varie dans un domaine allant de 80 à 100 pce, de préférence de 90 à 100 pce.

**5.** Composition selon l'une quelconque des revendications précédentes dans laquelle la poudrette de caoutchouc présente un extrait acétonique compris entre 3 et 30 % massique, préférentiellement entre 3 et 15 % massique, plus préférentiellement entre 3 et 10 % massique.

**6.** Composition selon l'une quelconque des revendications précédentes dans laquelle la poudrette de caoutchouc présente un extrait chloroformique compris entre 3 et 85 % massique, préférentiellement compris entre 3 et 50 % massique, plus préférentiellement entre 3 et 20 % massique, encore plus préférentiellement compris entre 5 et 15 % massique.

**7.** Composition selon l'une quelconque des revendications précédentes dans laquelle la poudrette de caoutchouc présente un rapport de l'extrait chloroformique sur l'extrait acétonique, exprimés en pourcentage massique, inférieur à 1,5.

**8.** Composition selon l'une quelconque des revendications précédentes dans laquelle la poudrette de caoutchouc présente une taille moyenne D50 comprise entre 100 et 300 $\mu$m.

**9.** Composition selon l'une quelconque des revendications précédentes dans laquelle la poudrette de caoutchouc présente une distribution de taille de particules telle que le rapport des tailles moyennes D10/D50 est supérieur ou égal à 0,5.

**10.** Composition selon l'une quelconque des revendications précédentes dans laquelle le taux de poudrette de caoutchouc est compris dans un domaine allant de 0,5 à 7 % en masse, de préférence de 1 à 6 % en masse.

**11.** Composition selon l'une quelconque des revendications précédentes dans laquelle la charge renforçante comprend du noir de carbone, de préférence le taux de noir de carbone étant compris entre 25 pce et 65 pce.

**12.** Article de caoutchouc comprenant une composition selon l'une quelconque des revendications précédentes.

**13.** Pneumatique comprenant une composition de caoutchouc définie à l'une quelconque des revendications 1 à 11, de préférence dans sa bande de roulement.

**Patentansprüche**

**1.** Kautschukzusammensetzung auf Basis von mindestens:

- 50 bis 100 phr eines Copolymers, das Ethylen-Einheiten und 1,3-Dien-Einheiten enthält, wobei die Ethylen-Einheiten in dem Copolymer mehr als 50 Mol-% der Monomereinheiten des Copolymers ausmachen,
- 0,1 bis 9 Massen-% an Altkautschukpulver,
- einem verstärkenden Füllstoff,
- einem Vernetzungssystem.

**2.** Zusammensetzung nach dem vorhergehenden Anspruch, wobei das Copolymer, welches Ethylen-Einheiten und

1,3-Dien-Einheiten enthält, mindestens 65 mol-% an Ethylen-Einheiten, vorzugsweise 65 bis 90 mol-% an Ethylen-Einheiten umfasst.

**3.** Zusammensetzung nach einem beliebigen der vorhergehenden Ansprüche, wobei es sich bei dem 1,3-Dien um 1,3-Butadien handelt.

**4.** Zusammensetzung nach einem beliebigen der vorhergehenden Ansprüche, wobei der Gehalt an Copolymer, welches Ethylen-Einheiten und 1,3-Dien-Einheiten enthält, in der Kautschukzusammensetzung im Bereich von 80 bis 100 phr, vorzugsweise von 90 bis 100 phr variiert.

**5.** Zusammensetzung nach einem beliebigen der vorhergehenden Ansprüche, wobei das Altkautschukpulver einen Acetonextrakt aufweist, der im Bereich von 3 bis 30 Massen-%, vorzugsweise von 3 bis 15 Massen-%, stärker bevorzugt von 3 bis 10 Massen-% liegt.

**6.** Zusammensetzung nach einem beliebigen der vorhergehenden Ansprüche, wobei das Altkautschukpulver einen Chloroformextrakt aufweist, der im Bereich von 3 bis 85 Massen-%, vorzugsweise im Bereich von 3 bis 50 Massen-%, stärker bevorzugt von 3 bis 20 Massen-%, noch stärker bevorzugt von 5 bis 15 Massen-% liegt.

**7.** Zusammensetzung nach einem beliebigen der vorhergehenden Ansprüche, wobei das Altkautschukpulver ein Verhältnis von Chloroformextrakt zu Acetonextrakt aufweist, das weniger als 1,5 beträgt, ausgedrückt nach Massenprozentanteilen.

**8.** Zusammensetzung nach einem beliebigen der vorhergehenden Ansprüche, wobei das Altkautschukpulver eine mittlere Größe D50 im Bereich von 100 bis 300 μm aufweist.

**9.** Zusammensetzung nach einem beliebigen der vorhergehenden Ansprüche, wobei das Altkautschukpulver eine Korngrößenverteilung aufweist, die derart ist, dass das Verhältnis der mittleren Größen D10/D50 mindestens 0,5 beträgt.

**10.** Zusammensetzung nach einem beliebigen der vorhergehenden Ansprüche, wobei der Gehalt an Altkautschukpulver in einem Bereich von 0,5 bis 7 Massen-%, vorzugsweise von 1 bis 6 Massen-% liegt.

**11.** Zusammensetzung nach einem beliebigen der vorhergehenden Ansprüche, wobei der verstärkende Füllstoff Ruß umfasst, wobei der Gehalt an Ruß vorzugsweise im Bereich von 25 phr bis 65 phr liegt.

**12.** Kautschukgegenstand, der eine Zusammensetzung nach einem beliebigen der vorhergehenden Ansprüche umfasst.

**13.** Luftreifen, der eine Kautschukzusammensetzung gemäß der Begriffsbestimmung in einem beliebigen der Ansprüche 1 bis 11 umfasst, und zwar vorzugsweise in seiner Lauffläche.

## Claims

**1.** Rubber composition based on at least:

- from 50 to 100 phr of a copolymer containing ethylene units and 1,3-diene units, the ethylene units in the copolymer representing more than 50 mol% of the monomer units of the copolymer,
- from 0.1% to 9% by mass of crumb rubber,
- a reinforcing filler,
- a crosslinking system.

**2.** Composition according to the preceding claim, in which the copolymer containing ethylene units and 1,3-diene units comprises at least 65 mol% of ethylene units, preferably from 65 mol% to 90 mol% of ethylene units.

**3.** Composition according to either of the preceding claims, in which the 1,3-diene is 1,3-butadiene.

**4.** Composition according to any one of the preceding claims, in which the content of the copolymer containing ethylene units and 1,3-diene units in the rubber composition is within a range from 80 to 100 phr, preferably from 90 to 100 phr.

**5.** Composition according to any one of the preceding claims, in which the crumb rubber has an acetone extract of between 3% and 30% by mass, preferentially between 3% and 15% by mass, more preferentially between 3% and 10% by mass.

**6.** Composition according to any one of the preceding claims, in which the crumb rubber has a chloroform extract of between 3% and 85% by mass, preferentially between 3% and 50% by mass, more preferentially between 3% and 20% by mass, even more preferentially between 5% and 15% by mass.

**7.** Composition according to any one of the preceding claims, in which the crumb rubber has a ratio of the chloroform extract to the acetone extract, expressed as a mass percentage, of less than 1.5.

**8.** Composition according to any one of the preceding claims, in which the crumb rubber has a mean size D50 of between 100 and 300 μm.

**9.** Composition according to any one of the preceding claims in which the crumb rubber has a particle size distribution such that the mean size ratio D10/D50 is greater than or equal to 0.5.

**10.** Composition according to any one of the preceding claims, in which the content of crumb rubber is within a range from 0.5% to 7% by mass, preferably from 1% to 6% by mass.

**11.** Composition according to any one of the preceding claims, in which the reinforcing filler comprises carbon black, the carbon black preferably being in a content of between 25 and 65 phr.

**12.** Rubber article comprising a composition according to any one of the preceding claims.

**13.** Tyre comprising a rubber composition defined in any one of Claims 1 to 11, preferably in its tread.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2019243711 A1
- WO 2018115720 A1
- WO 2020128257 A1
- WO 2020053521 A1
- EP 1092731 A
- WO 2004035639 A
- WO 2007054223 A
- WO 2007054224 A
- WO 2017093654 A1
- WO 2018020122 A1
- WO 2018020123 A1
- US 7445170 B
- US 7861958 B
- WO 2009083160 A